# DEMANDE DE BREVET EUROPEEN

(11) **EP 2 397 792 A2**
(43) Date de publication de la demande: **21.12.2011**
(21) Numéro de dépôt: 11169842.9
(22) Date de dépôt: 14.06.2011
(51) Int. Cl.: F24J 2/52, H01L 31/042

(54) **Structure-support pour panneau et installation correspondante**

(30) Priorité: 15.06.2010 FR 1002519
(71) Demandeur: Tavagor Developpement, 17000 La Rochelle (FR)
(72) Inventeur: Tabeau, Patrice, 17670 La Couarde Sur Mer (FR)
(74) Mandataire: Godineau, Valérie

(57) **Abrégé**

L'invention concerne une structure-support pour panneau (4) comprenant un cadre par panneau (4) à supporter, ledit cadre étant formé de longerons (2, 200) et de traverses (3) réalisés chacun sous forme d'un profilé présentant au moins deux ondes et une partie conformée en canal de récupération d'eau, lesdits longerons et lesdites traverses étant écartés les uns des autres de manière à permettre audit panneau à supporter, de reposer, directement ou indirectement, par ses bords sur les longerons et les traverses dudit cadre à l'aplomb des parties des longerons et traverses qui forment canaux de récupération d'eau. Chaque longeron est équipé de platines de fixation fixées à cheval sur des flancs d'onde dudit longeron. L'invention concerne également une installation correspondante.

## Description

La présente invention concerne de manière générale les structures-support pour panneau(x), de préférence à positionner sur une toiture, et les installations de panneau(x) correspondantes.

Jusqu'ici, pour l'installation de panneaux photovoltaïques sur une toiture, la zone de la toiture destinée à recevoir lesdits panneaux photovoltaïques est entièrement recouverte de plaques ondulées, appelées bacs, qui forment une structure-support destinée à recevoir des platines de fixation pour le maintien des panneaux sur la toiture.

De manière usuelle, chaque panneau photovoltaïque comprend une plaque de verre, munie de cellules photovoltaïques, entourée d'un cadre. Un joint d'étanchéité est réalisé entre le bord périphérique intérieur du cadre et le bord périphérique extérieur de la plaque de verre.

L'évolution des normes d'installation des panneaux photovoltaïques sur les toitures impose que les panneaux fassent partie des pièces d'étanchéité de la toiture pour assurer une bonne ventilation des panneaux, ce qui exclut la solution connue de l'état de la technique consistant à recouvrir de plaques ondulées toute la surface de la zone de la toiture à équiper de panneaux.

On connait également des documents JP 2003 268942, JP 10 183899, FR 2.915.217, DE 203 04 676, DE 20 2010 002489, DE 20 2007 010520, JP 2000 234425, JP 11 280224 et JP 2002 129710 des structures-supports pour panneaux formées de longerons et de traverses écartés les uns des autres de manière à former un cadre de support pour chaque panneau. Cependant, dans ces solutions, les système de fixation des panneaux aux longerons sont complexes et fastidieux à installer et/ou ne permettent pas d'assurer un positionnement fiable des panneaux le long des longerons.

La présente invention a pour but de proposer une structure-support pour panneau(x), tel(s) que panneau(x) photovoltaïque(s), qui permet d'assurer un positionnement et un soutien fiable de chaque panneau tout en offrant une bonne ventilation sous chaque panneau et, le cas échéant, entre les panneaux, ainsi qu'une évacuation fiable des eaux.

Un autre but de l'invention est de proposer une structure support qui comprend un système de fixation du ou des panneaux sur les longerons qui soit aisé et rapide en mettre en place sur les longerons, et qui offre un bon appui et une position fiable du ou des panneaux sur lesdits longerons.

A cet effet, l'invention a pour objet une structure-support pour panneau(x), tels que panneau(x) photovoltaïque(s), comprenant, pour chaque panneau à supporter, un cadre formé de longerons et de traverses réalisés chacun sous forme d'un profilé présentant au moins une partie conformée en canal de récupération d'eau, lesdits longerons et lesdites traverses étant écartés les uns des autres, de manière à délimiter entre eux un espace de ventilation sous ledit panneau à supporter, et de manière à permettre audit panneau à supporter, de reposer, directement ou indirectement, par ses bords sur les longerons et les traverses dudit cadre, à l'aplomb des parties des longerons et traverses qui forment canaux de récupération d'eau afin de récupérer l'eau qui s'écoule des bords du ou de chaque panneau à l'aide desdits longerons et traverses de la structure-support,
chaque longeron étant formé par une plaque profilée présentant au moins deux ondes longitudinales, l'espace délimité entre les deux ondes formant un canal de récupération d'eau dit central,
caractérisée en ce que la structure-support comprend, pour chaque longeron, au moins deux platines de fixation écartées l'une de l'autre le long dudit longeron et positionnées chacune à cheval sur lesdites au moins deux ondes en étant fixées sur les deux flancs extérieurs de l'ensemble d'ondes du longeron chevauché par lesdites platines de fixation.

Autrement dit, les longerons et traverses de la structure-support selon l'invention délimitent pour chaque panneau un cadre de soutien dont la face supérieure est fermée par ledit panneau et dont la face inférieure est ouverte pour permettre sa ventilation.

En outre, comme détaillé ci-après, les platines de fixation permettent, par l'intermédiaire de pièces de fixation, de maintenir le panneau, au niveau de zones ponctuelles, de sorte que la structure est dépourvue de moyens d'enfermement périphérique du panneau, ce qui assure une bonne ventilation des panneaux au niveau de leur bordure périphérique et donc une bonne ventilation entre les panneaux. En effet, les bords de chaque panneau ne sont pas enfermés, mais simplement tenus en des zones ponctuelles par lesdites pièces de fixation montées sur les platines de fixation, elles-mêmes portées par les longerons, comme détaillé ci-après.

La structure selon l'invention dispose ainsi, autour de chaque panneau, de moyens d'étanchéité latéraux et de moyens d'étanchéité haut et bas, formés par lesdits longerons et traverses conformés en canaux de récupération d'eau, tout en laissant libre un espace sous chaque panneau. Ainsi, ladite structure-support selon l'invention permet au(x) panneau(x) de faire partie des pièces d'étanchéité de la toiture en offrant un espace de ventilation sous chaque panneau et en assurant la récupération et l'évacuation des eaux au niveau des bords latéraux, et des bords haut et bas de chaque panneau.

En outre, grâce à la structure-support selon l'invention, les panneaux sont supportés et calés sur la toiture sans être enfermés, ce qui leur permet d'être ventilés de manière fiable et ainsi d'atteindre de bonnes performances énergétiques.

La conception sous forme de cadre(s) de la structure-support permet de bénéficier d'une structure-support simplifiée sans avoir à disposer des bacs ondulés sur toute la zone de couverture des panneaux et tout en assurant une reprise d'effort suffisante des panneaux.

La fixation de chaque platine sur les flancs de l'ensemble d'ondes situés côté extérieur dudit ensemble permet d'assurer une mise en place aisée et rapide desdites platines sur les longerons du système de fixation. Lesdites platines sont destinées à recevoir des pièces de fixation de panneau(x) pour former des systèmes de fixation pour les panneaux sur les longerons. La fixation de ces platines sur des flancs d'onde de longerons permet de réduire les risques d'infiltration puisque ladite fixation entre platine et longeron s'effectue sur une zone en pente formée par ledit flanc et non pas sur un plat ou creux du longeron. En outre, la fixation de chaque platine s'effectue sur les flancs extérieurs de l'ensemble d'onde chevauché, c'est-à-dire sur les flancs de la paire d'onde opposés aux flancs dits intérieurs qui délimitent le canal de récupération d'eau central, ce qui limite encore le risque d'infiltration d'eau.

Autrement dit, chaque platine de fixation s'étend de part et d'autre desdites au moins deux ondes suivant une direction transversale à l'axe longitudinal dudit longeron.

Les ondes des longerons forment par leurs flancs des surfaces de fixation des platines positionnées à cheval sur au moins deux ondes. En outre, le passage délimité entre deux ondes forme un canal de récupération d'eau. Ainsi, la réalisation des longerons sous forme de plaques ondulées à au moins deux ondes permet, d'une part, de fixer aisément et rapidement les platines de fixation sur les longerons et, d'autre part, d'assurer le guidage et l'évacuation des eaux.

Chaque onde se présente sous la forme d'une nervure qui comprend deux flancs opposés convergeant en direction du sommet de la nervure.

Selon une caractéristique avantageuse de l'invention, chaque platine de fixation comprend deux parties d'extrémité qui forment entre elles un V tronqué renversé à l'état fixé de la platine sur le longeron correspondant, lesdites parties d'extrémité étant fixées sur lesdits flancs extérieurs de l'ensemble d'ondes chevauché par ladite platine.

Autrement dit, lesdites parties d'extrémité sont inclinées en sens opposé l'une de l'autre par rapport à la partie centrale de la platine dans laquelle est ménagée ladite au moins une fente qui loge une pièce écrou destinée à recevoir une pièce de fixation pour panneau.

Lesdites parties d'extrémité de la platine forment entre elles un angle sensiblement égal à l'angle que forment entre eux lesdits flancs extérieurs de l'ensemble d'ondes chevauché. Ainsi, les parties d'extrémité de chaque platine épousent les flancs extérieurs de l'ensemble d'ondes chevauché par ladite platine. Avantageusement, les deux parties d'extrémité de la platine sont fixées par vissage à travers les deux flancs extérieurs de l'ensemble d'ondes.

Le fait de positionner chaque platine de fixation sur les flancs extérieur d'un ensemble d'ondes, tel qu'une paire d'ondes, permet grâce à l'inclinaison des flancs extérieur de l'ensemble d'ondes et des parties d'extrémité en V tronquée de la platine, d'assembler par emboitement progressif la platine sur le longeron et ainsi d'obtenir un positionnement fiable et précis des platines sur les longerons.

L'ensemble d'ondes chevauché peut être formé de deux ou trois ondes successives. Dans le cas de trois ondes successives chevauchées par les platines, ledit canal central est formé de deux canaux séparés l'un de l'autre par l'onde centrale.

Selon une caractéristique avantageuse de l'invention, au moins un, de préférence chacun, des bords longitudinaux libres de chaque longeron présente un retour côté support du panneau de manière à former un canal de récupération d'eau dit latéral.

Le ou chaque retour ménagé le long d'un bord longitudinal de chaque longeron limite les risques d'infiltration d'eau.

Selon une caractéristique avantageuse de l'invention, les traverses reposent, directement ou indirectement, sur les longerons en s'étendant orthogonalement auxdits longerons avec interruption des traverses au niveau d'une partie dudit longeron formant canal de récupération d'eau de telle sorte que l'eau récupérée par chaque traverse tombe dans ledit canal de récupération d'eau du longeron.

Selon une caractéristique avantageuse de l'invention, chaque longeron est équipé de moyens de maintien et de guidage de traverse, chaque moyen de maintien et de guidage comprenant au moins un passage de guidage à l'intérieur duquel chaque traverse est apte à être introduite et maintenue par clipsage.

Selon une caractéristique avantageuse de l'invention, au moins un longeron et/ou une traverse formant un bord latéral ou un bord d'extrémité haut ou bas de la structure-support, de préférence chacun des longerons et traverses formant lesdits bords de la structure-support, comprend une bavette qui prolonge ladite traverse ou ledit longeron suivant une direction transversale respectivement audit longeron ou à ladite traverse.

Selon une caractéristique avantageuse de l'invention, les platines de fixation, disposées à cheval sur au moins deux ondes du longeron, sont équipées de pièces de fixation permettant de maintenir le panneau correspondant sur la structure-support tout en laissant un espace de ventilation autour de la périphérie dudit panneau.

L'invention concerne également une installation de panneau(x), de préférence de panneaux photovoltaïques, comprenant, d'une part, au moins un panneau, de préférence plusieurs panneaux juxtaposés à écartement de manière à laisser un espace libre entre les panneaux, et, d'autre part, une structure-support, ladite structure-support comprenant un cadre par panneau formé de longerons et de traverses réalisés chacun sous forme d'un profilé présentant au moins une partie conformée en canal de récupération d'eau, lesdits longerons et lesdites traverses étant écartés les uns des autres, en fonction des dimensions du panneau correspondant à supporter, de manière à délimiter entre eux un espace de ventilation sous ledit panneau et de telle sorte que ledit panneau associé audit cadre repose, directement ou indirectement, par ses bords sur lesdits longerons et lesdites traverses à l'aplomb des parties des longerons et traverses qui forment des canaux de récupération d'eau de manière à récupérer l'eau qui s'écoule des bords de chaque panneau à l'aide desdits longerons et traverses de la structure-support,
chaque longeron étant formé par une plaque profilée présentant au moins deux ondes longitudinales, l'espace délimité entre les deux ondes formant un canal de récupération d'eau dit central,
caractérisée en ce que la structure-support comprend, pour chaque longeron, au moins deux platines de fixation écartées l'une de l'autre le long dudit longeron et positionnées chacune à cheval sur lesdites au moins deux ondes en étant fixées sur les deux flancs extérieurs de l'ensemble d'ondes du longeron chevauché par lesdites platines de fixation.

Selon une caractéristique avantageuse de l'installation selon l'invention, du type comprenant au moins deux panneaux et du type pour laquelle la structure-support comprend au moins trois longerons parallèles et écartés les uns des autres en fonction des dimensions des panneaux de telle sorte que le ou chaque longeron, dit intermédiaire, situé entre deux autres longerons porte, directement ou indirectement, deux panneaux par leurs bords en vis-à-vis qui sont positionnés à l'aplomb d'une partie dudit longeron formant canal de récupération d'eau.

Selon une caractéristique avantageuse de l'installation selon l'invention, lesdites platines de fixation sont équipées de pièces de fixation qui maintiennent chaque panneau par deux de ses bords opposés au niveau de zones ponctuelles desdits bords du panneau en laissant un espace libre de ventilation autour de la périphérie du panneau.

Selon une caractéristique avantageuse de l'installation selon l'invention, du type pour laquelle le ou chaque panneau est un panneau photovoltaïque formé d'une plaque, de préférence en verre, munie d'une matrice de cellules photovoltaïque et entourée d'un cadre, un joint d'étanchéité étant ménagé entre le bord extérieur de la plaque de cellules et le bord intérieur du cadre du panneau. Les longerons de la structure-support sont dimensionnés et positionnés en fonction des dimensions du ou des panneaux, de telle sorte que chaque bord latéral intérieur du cadre d'un panneau porté par un longeron, est situé à l'aplomb d'une partie du longeron formant canal de récupération d'eau.

L'invention sera bien comprise à la lecture de la description suivante d'exemples de réalisation, en référence aux dessins annexés dans lesquels :
- les figures 1 à 4 sont des vues en perspective de la structure-support selon l'invention montrant les différentes étapes d'installation des panneaux sur une toiture;
- la figure 5 est une vue en perspective d'un longeron dit intermédiaire de la structure selon l'invention ;
- la figure 6 est une vue en perspective d'un longeron dit d'extrémité de la structure selon l'invention qui présente une bavette ;
- la figure 7 est une vue de moyens de maintien et de guidage de traverse à fixer sur un longeron intermédiaire ;
- la figure 8 est une vue de moyens de maintien et de guidage de traverse à fixer sur un longeron d'extrémité.

En référence aux figures et comme rappelé ci-dessus, l'invention concerne une structure-support pour panneau 4, tel que panneau photovoltaïque.

De manière caractéristique à l'invention, ladite structure-support comprend un cadre par panneau 4 à supporter. Ledit ou chaque cadre est formé de longerons 2, 200 et de traverses 3 réalisés chacun sous forme d'un profilé présentant au moins une partie conformée en canal de récupération d'eau. On définit les bords périphériques de chaque panneau 4 de la manière suivante. Les bords latéraux correspondent aux bords du panneau 4 qui sont parallèles aux longerons 2, 200, c'est-à-dire parallèles aux chevrons 7 de la toiture, et les bords haut et bas du panneau 4 correspondent aux deux autres bords opposés du panneau 4 qui sont parallèles aux traverses 3, c'est-à-dire parallèles aux pannes de la toiture.

Dans l'exemple illustré aux figures, chaque panneau 4 est un panneau photovoltaïque formé d'une plaque, de préférence en verre, munie d'une matrice de cellules photovoltaïques et entourée d'un cadre. Un joint d'étanchéité est ménagé entre le bord extérieur de la plaque de cellules et le bord intérieur du cadre du panneau 4.

Lesdits longerons 2, 200 et lesdites traverses 3 sont écartés les uns des autres, en fonction des dimensions du panneau 4 correspondant à supporter, de manière à délimiter entre eux un espace de ventilation sous ledit panneau 4 à supporter, et de manière à permettre audit panneau 4 à supporter, de reposer, directement ou indirectement, par ses bords sur les longerons 2, 200 et les traverses 3 formant ledit cadre à l'aplomb des parties des longerons 2, 200 et traverses 3 qui forment des canaux de récupération d'eau. Une telle conception de la structure-support permet de récupérer l'eau qui s'écoule des bords de chaque panneau 4 à l'aide desdits longerons 2, 200 et traverses 3 de la structure-support. Dans l'exemple illustré aux figures, chaque panneau 4 repose par ses bords latéraux sur des platines 1 montées sur les longerons 2, 200 et par ses bords d'extrémité haut et bas sur les traverses 3, en particulier, comme détaillé ci-après, sur le sommet de l'aile d'une traverse 3 haute, respectivement basse, ladite aile étant située du côté intérieur du cadre formé par lesdits longerons 2, 200 et traverses 3.

Chaque longeron 2, 200 et traverse 3 présente une face supérieure ouverte permettant de récupérer l'eau. En particulier, chaque longeron 2, 200 et chaque traverse 3 présente au moins une partie longitudinale concave tournée vers le haut pour former canal de récupération d'eau.

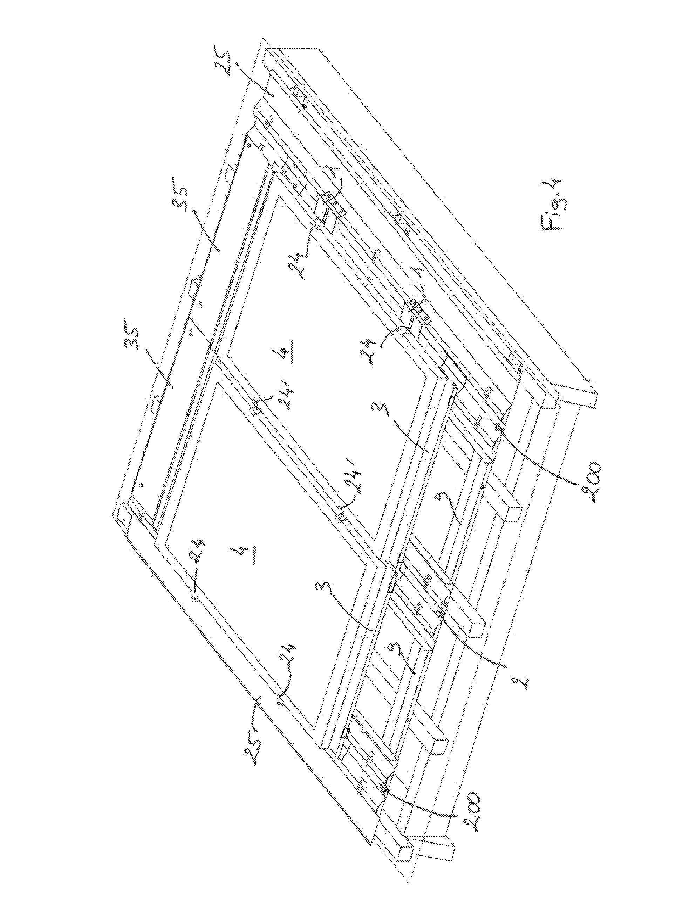

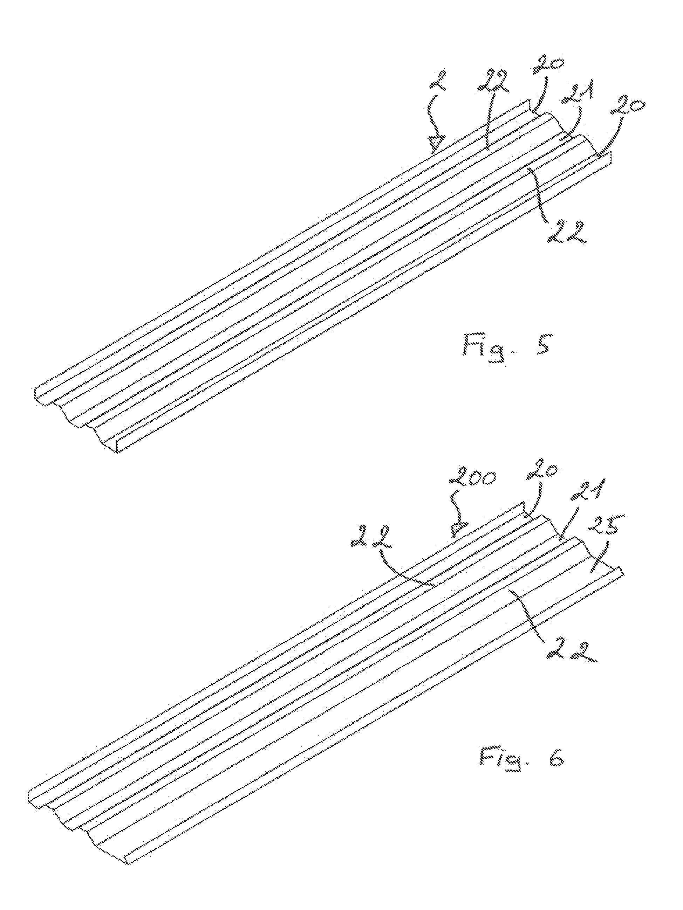

Dans l'exemple illustré plus particulièrement aux figures 4 et 5, chaque longeron 2, 200 est formé par une plaque profilée présentant au moins deux ondes 22 longitudinales. L'espace 21 délimité entre les deux ondes 22 adjacentes forme un canal de récupération d'eau dit central.

Lesdites ondes 22 peuvent présenter des sections transversales de différentes formes. Dans l'exemple illustré aux figures, chaque onde 22 présente une section transversale de forme générale trapézoïdale, la petite base du trapèze formant le sommet de l'onde 22.

Les platines 1 sont des platines de longueur choisie pour être montées à cheval sur au moins deux ondes. Avantageusement, la structure de support peut comprendre des platines, dites platines trois ondes, dont la longueur est choisie de manière à permettre leur montage à cheval sur trois ondes.

Les bords longitudinaux de la platine présentent chacun une partie pliée en retour côté face inférieure du corps de platine de manière à augmenter la rigidité de la platine.

Les parties d'extrémité 102 de la platine 1 sont pliées de manière à présenter une partie s'étendant jusqu'au bord d'extrémité libre correspondant suivant un angle donné par rapport au plan moyen du corps de platine. Lesdites parties inclinées des extrémités opposées de la platine 1 sont orientées en V inversé en position fixée de la platine sur ladite structure support.

Lesdites parties inclinées 102 permettent le montage de la platine à cheval sur plusieurs ondes, de préférence deux ou trois, d'un bac. Lesdites parties inclinées viennent chacune en appui contre un flanc d'une onde, pour être fixées par vissage sur les flancs extérieurs de l'ensemble d'ondes que la platine chevauche. A cet effet, chaque partie d'extrémité de la platine comporte des orifices traversants.

Les parties d'extrémité comprennent également chacune une partie, dite droite, en retour, sensiblement perpendiculaire au plan moyen du corps principal de platine, qui s'étend entre la partie inclinée d'extrémité et le corps principal de platine.

Lesdites traverses 3 sont à section en forme générale de U. Ainsi, l'espace délimité entre les branches du U de chaque traverse 3 forme un canal de récupération d'eau.

Lesdits longerons 2, 200, de même que les traverses 3, sont des pièces distinctes les unes des autres qui, grâce à leur écartement, délimitent un réel espace de ventilation sous le panneau 4.

L'écart entre les longerons 2, 200 est conditionné par la largeur des panneaux 4. En particulier, les largeurs des longerons et l'écartement entre longerons 2, 200 sont choisis de telle sorte que, lors du positionnement d'un panneau 4 sur la structure-support, d'une part, chaque bord latéral du panneau, correspondant au bord latéral du cadre du panneau situé côté extérieur du panneau, s'étend au dessus et en regard d'un longeron 2, 200 et, d'autre part, chaque bord latéral du cadre du panneau situé côté intérieur du panneau s'étend au dessus et en regard d'un longeron 2, 200. De manière similaire, on prévoit que les largeurs des traverses 3 et l'écartement entre traverses 3 sont choisis de telle sorte que les bords haut et bas, intérieur et extérieur, du cadre du panneau 4 s'étendent au dessus et en regard d'une traverse 3.

Ainsi, en cas de défaut du joint d'étanchéité entre la plaque de cellules photovoltaïques et le cadre du panneau, l'eau qui s'écoule le long de la bordure périphérique intérieure du cadre du panneau 4 tombe dans les longerons 2, 200 et/ou dans les traverses 3.

Préférentiellement, comme dans l'exemple illustré aux figures, la structure-support comprend au moins trois longerons 2, 200 parallèles et écartés les uns des autres en fonction des dimensions des panneaux 4 de telle sorte que le ou chaque longeron 2, dit intermédiaire, situé entre deux autres longerons 200 porte, par l'intermédiaire de platines 1, deux panneaux 4 par leurs bords en vis-à-vis. Lesdits bords en vis-à-vis des deux panneaux 4 portés par ledit longeron intermédiaire 2 sont positionnés à l'aplomb d'une partie 21 dudit longeron formant canal de récupération d'eau.

Ainsi, chaque cadre de la structure-support qui supporte un panneau 4 comprend un longeron 2 en commun avec un autre cadre support de panneau dans le cas d'une juxtaposition horizontale d'au moins une partie des panneaux, et/ou une traverse 3 en commun dans le cas d'une juxtaposition verticale d'au moins une partie des panneaux.

Lesdits longerons 2, 200 sont équipés, de préférence par l'intermédiaire de platines de fixation 1, de pièces de fixation 24, 24' qui maintiennent chaque panneau 4 par ses deux bords latéraux opposés, au niveau de zones ponctuelles desdits bords du panneau 4 en laissant un espace libre de ventilation autour de la périphérie du panneau 4.

En particulier, dans l'exemple illustré aux figures, lesdits longerons 2, 200 sont écartés entre eux de telle sorte que l'espace 21 entre les deux ondes 22 de chaque longeron 2 intermédiaire est destiné à s'étendre en regard de l'espace délimité entre les bords latéraux des deux panneaux 4 pour récupérer l'eau qui s'écoule entre lesdits panneaux 4.

Dans l'exemple illustré aux figures, chaque panneau 4 repose sur quatre platines 1 fixées sur deux longerons 2, 200. L'eau est récupérée par les traverses 3 et les longerons 2, 200 qui portent les panneaux 4 pour être évacuée vers une gouttière de la toiture.

Comme illustré à la figure 5, chacun des bords longitudinaux libres de chaque longeron 2 dit intermédiaire, situé entre deux autres longerons 200 de la structure-support, présente un retour formé par un pli à angle droit, côté support du panneau, c'est-à-dire vers le haut, de manière à former un canal 20 de récupération d'eau dit latéral, entre chaque retour et l'onde 22 correspondante située à proximité (voir figure 4).

Les deux retours de chaque longeron 2 intermédiaire sont de hauteur de préférence sensiblement égale à la hauteur des ondes. Ainsi, chaque longeron 2 intermédiaire comprend une goulotte centrale 21 entre deux ondes 22 et des goulottes latérales 20 le long de chacun des bords longitudinaux dudit longeron.

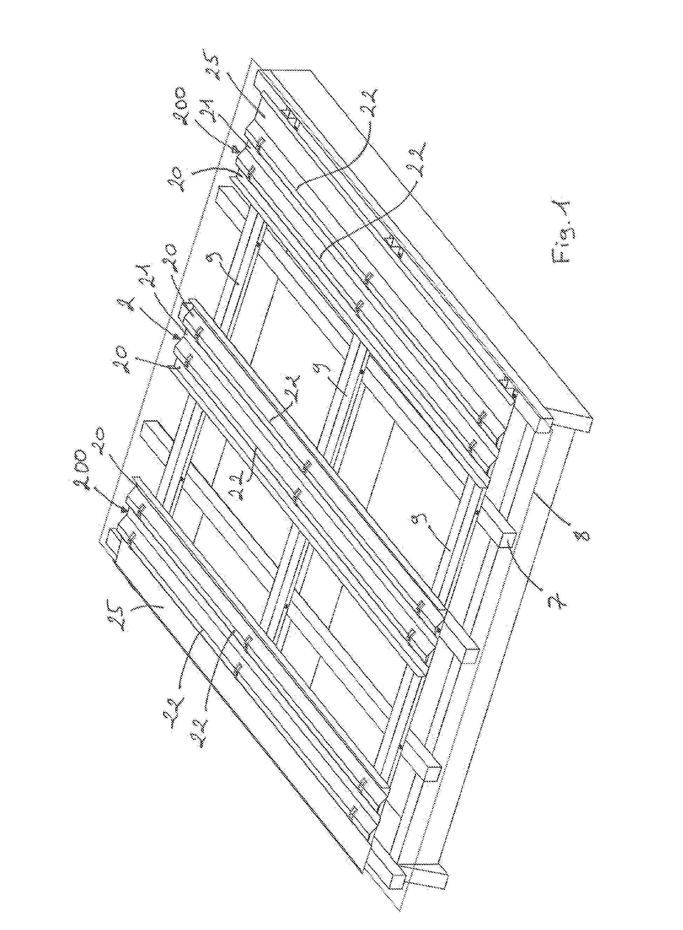

Comme illustré plus particulièrement aux figures 1 et 5, les deux longerons 200 situés aux extrémités latérales de la structure-support diffèrent des longerons 2 intermédiaires en ce qu'ils présentent chacun, côté extérieur de la structure-support, une bavette 25 qui permet d'assurer la jonction entre ledit longeron d'extrémité 200 et les tuiles de la toiture. Dans l'exemple illustré aux figures, ladite bavette 25 est formée d'une seule pièce avec le longeron d'extrémité 200 correspondant. En particulier, ladite bavette 25 est formée par une partie plate qui prolonge latéralement, c'est-à-dire selon la direction orthogonale à l'axe du longeron 200, les ondes 22 du longeron 200, en partant d'un pied d'une onde 22. Le bord longitudinal libre de ladite partie plate formant bavette 25 présente un pli orienté vers le haut, c'est-à-dire côté panneau, de préférence vers l'intérieur dudit longeron, de manière à former une barrière pour contenir l'eau et également une butée de positionnement des tuiles disposées à cheval sur ce pli.

Les traverses 3 reposent, par l'intermédiaire d'éléments de maintien et de guidage 6, 600 détaillés ci-après, sur les longerons 2, 200 en s'étendant orthogonalement auxdits longerons 2, 200 avec interruption des traverses 3 au niveau d'une partie dudit longeron 2, 200 formant ledit canal de récupération d'eau 21 de telle sorte que l'eau récupérée par chaque traverse 3 tombe dans ledit canal de récupération d'eau 21 du longeron 2, 200.

Dans l'exemple illustré aux figures, lesdits éléments de maintien et de guidage 6, 600 sont rapportés sur les longerons 2, 200. En variante, on peut prévoir que lesdits éléments de maintien et de guidage soient formés d'une seule pièce avec lesdits longerons.

Dans l'exemple illustré aux figures, les traverses en U sont clipsées sur des contre-pièces, formant lesdits éléments de maintien et de guidage 6, 600, fixées sur les longerons.

Chaque élément de maintien et de guidage 6, 600 est destiné à s'étendre transversalement aux longerons et présente au moins un passage de guidage 60 d'une traverse délimité entre deux retours 61 longitudinaux orientés vers le haut. Les bords longitudinaux libres 62 desdits retours 61 sont repliés vers le côté intérieur du passage de guidage correspondant, pour permettre une fixation par clipsage d'une traverse 3 en U dans ledit passage de guidage 60. La traverse 3 en U est amenée par le dessus du passage de guidage 60 en étant introduite dans le passage de guidage 60 correspondant de sorte que chaque bord longitudinal libre supérieur de la traverse 3 s'engage par clipsage dans le logement formé par le repli intérieur 62 du bord libre du retour 61.

Lesdites traverses 3 en U fixées sur les longerons 2, 200, via les éléments de maintien et de guidage 6, 600, s'étendent sur une hauteur correspondant à la hauteur des platines 1 de sorte que chaque panneau 4 repose en appui sur les platines 1 des longerons 2, 200 et sur les traverses 3.

Chaque élément de maintien et de guidage 6, 600 comprend également une partie dite d'applique, juxtaposée au(x) passage(s) de guidage, apte à épouser la forme de l'espace 21 délimité entre deux ondes 22 d'un longeron, de manière à assurer un positionnement fiable de l'élément de maintien et de guidage 6, 600 sur le longeron correspondant. L'axe du passage de guidage 60 est orthogonal à l'axe de la partie d'applique 63 de l'élément de maintien et de guidage 6, 600.

Chaque longeron 2 situé entre deux autres longerons 200 est équipé d'éléments de maintien et de guidage 600 comprenant chacun deux passages de guidage coaxiaux 60 raccordés l'un à l'autre par une partie d'applique 63 de forme complémentaire de la surface délimitée entre deux ondes 22. Lesdits passages de guidage 60 débouchent chacun au niveau de la partie d'applique 63 et sont destinés à recevoir chacun l'extrémité d'une traverse 3 de telle sorte que lesdites traverses 3 débouchent au droit de ladite partie d'applique 63 de manière à récupérer dans le longeron 2 l'eau collectée par les deux traverses 3 introduites dans les deux passages de guidage 60. On peut prévoir que l'eau tombe des deux traverses 3 dans un même canal de récupération d'eau du longeron 2 ou dans deux canaux différents du longeron 2.

Chacune des traverses 3 formant lesdits bords d'extrémité haut et bas de la structure-support est munie d'une bavette 35 qui prolonge ladite traverse 3 suivant une direction transversale à ladite traverse 3. Ainsi, la structure-support comprend des bavettes 25, 35 situées autour des bordures basse, haute et latérales de la structure-support pour assurer l'étanchéité autour de ladite structure-support entre les tuiles hautes situées le long de la panne haute et ladite structure-support, entre la structure-support et la gouttière située le long de la panne basse, et entre la structure-support et les tuiles latérales.

On peut prévoir que les bavettes 25, 35 soient rapportées ou formées d'une seule pièce avec les longerons d'extrémité 200 et/ou les traverses d'extrémité 3 de la structure-support. Dans l'exemple illustré aux figures, les bavettes 25 latérales, encore appelées bavettes verticales, sont formées d'une seule pièce dans le prolongement latéral des longerons d'extrémité 200 et les bavettes 35 dites hautes et basse, ou encore bavette horizontales, sont rapportées, sur les traverses d'extrémité 3 qui forment les bords haut et bas de la structure-support.

Chaque longeron 2, 200 est équipé, via lesdites platines 1 de fixation, de préférence deux platines 1 par longeron pour chaque panneau 4, disposées à cheval sur au moins deux ondes du longeron 2, de pièces de fixation 24, 24' permettant de maintenir le panneau 4 correspondant sur la structure-support tout en laissant un espace de ventilation autour de la périphérie dudit panneau 4.

Le ou chaque longeron intermédiaire 2 porte des pièces de fixation 24' dites centrales munie de deux parties en équerre s'étendant en sens opposé pour venir en applique de la face supérieure de chacun des deux panneaux 4 juxtaposés et pour caler latéralement lesdits panneaux 4.

Les longerons d'extrémité 200 sont équipés de pièces de fixation 24, présentant une forme générale d'équerre ouverte en direction du panneau 4 à fixer de manière à venir en applique sur la face supérieure du panneau 4 soutenu par le longeron 200 correspondant.

On décrit ci-après l'installation sur une toiture de deux panneaux 4. Bien entendu le procédé peut être répété pour installer un nombre plus important de panneaux, en particulier une matrice de panneaux.

Comme illustré à la figure 1, des rails 9 sont fixés sur des chevrons 7 de la toiture pour former des poutres de fixation de la structure-support des panneaux. Lesdits rails 9 sont orientés orthogonalement aux chevrons 7. Avantageusement, un film d'étanchéité 8 est interposé entre les rails de fixation 9 et les chevrons 7. Lesdits rails 9 sont orientés parallèlement les uns aux autres en étant écartés les uns des autres le long des chevrons 7.

Les longerons 2, 200, formés de plaques profilées ondulées, sont fixés sur lesdits rails de fixation 9. Lesdits longerons 2, 200 sont orientés orthogonalement aux rails de fixation 9, c'est-à-dire parallèlement aux chevrons 7.

Comme rappelé ci-dessus, les longerons 2, 200 sont disposés parallèlement et écartés entre eux en fonction de la largeur des panneaux 4 de telle sorte que, à l'état positionné des panneaux 4, chaque bord latéral, dit bord "vertical", d'un panneau soit situé à l'aplomb d'un longeron 2, 200. En particulier, la position des longerons 2, 200 est choisie de telle sorte que l'espace délimité entre deux panneaux 4 soit situé à l'aplomb de l'espace 21 entre deux ondes 22 d'un longeron 2, 200 pour offrir une bonne évacuation des eaux. En outre, les longerons 2, 200 sont dimensionnés et positionnés de telle sorte que chaque bord latéral intérieur du cadre de chaque panneau, au niveau duquel se situe le joint d'étanchéité entre le verre et le cadre du panneau photovoltaïque, est situé à l'aplomb d'un longeron, par exemple à l'aplomb d'une bordure longitudinale 20 du longeron formant gouttière latérale, pour permettre la récupération et l'évacuation d'eau de manière fiable en cas de rupture du joint d'étanchéité.

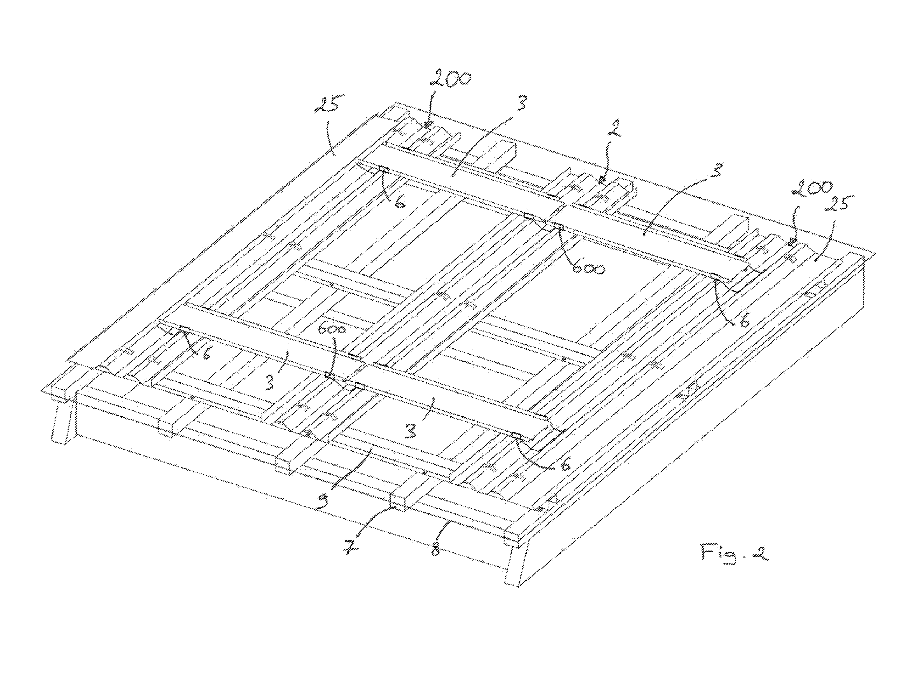

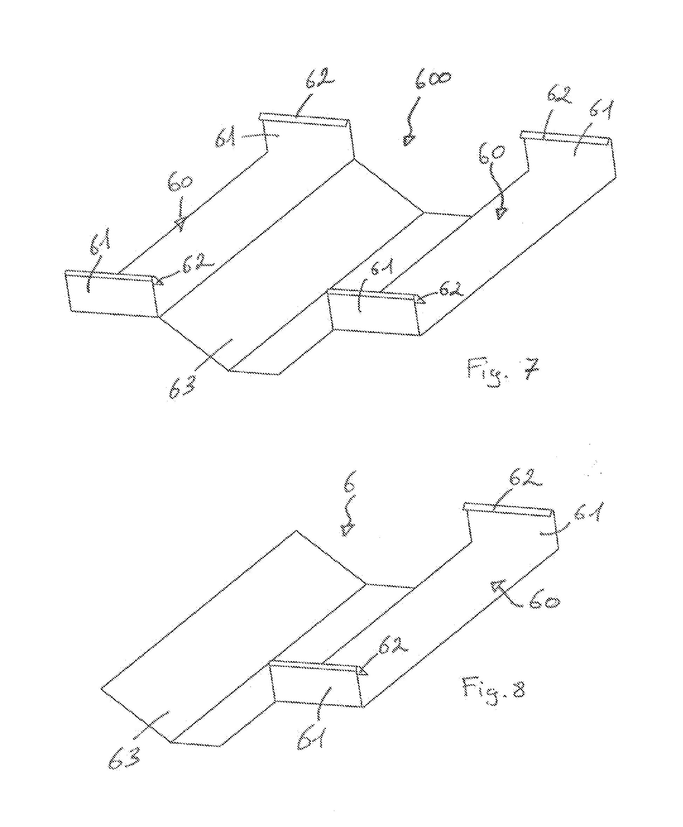

Comme illustré aux figures 2, 6 et 7, on fixe sur lesdits longerons des moyens de guidage et de maintien 6, 600 des traverses de soutien des panneaux. Comme rappelé ci-dessus, lesdits moyens de guidage et de maintien 6, 600 sont positionnés à écartement les uns des autres en fonction des positions souhaitées des traverses 3, c'est-à-dire de telle sorte que les traverses 3 maintenues par lesdits moyens de guidage et de maintien 6, 600 supportent le bord haut ou bas d'un panneau 4 tout en s'étendant en saillie dudit bord haut ou bas du panneau 4 pour former une goulotte de récupération d'eau. Dans l'exemple illustré aux figures, lesdits moyens de guidage et de maintien 6, 600 sont fixés via leur partie d'applique 63 contre au moins un flanc des ondes 22 du longeron 2, 200 correspondant. Le ou chaque passage de guidage 60 desdits moyens de guidage 6, 600 est positionné sur le sommet d'une onde 22 avec un axe de passage orienté orthogonalement à l'axe des longerons 2, 200.

Les traverses 3 sont alors engagées par le dessus dans lesdits passages de guidage 60 des moyens de guidage. Chaque bord libre d'une aile d'une traverse vient alors s'engager par clipsage dans le logement formé par le pli intérieur du retour correspondant du passage de guidage 60.

Chaque traverse 3 est positionnée de telle sorte que chacune de ses extrémités débouche à l'aplomb du longeron 2, 200 correspondant qui la soutient, de préférence à l'aplomb de la goulotte centrale 21 dudit longeron.

Chaque longeron intermédiaire 2 qui s'étend entre deux autres longerons 200 est équipé de moyens de guidage et de maintien 600 qui présentent deux passages de guidage 60 coaxiaux et maintenus écartés l'un de l'autre par une partie d'applique 63 contre la surface de la goulotte centrale délimitée entre deux ondes. Ladite surface 63 est formée des flancs intérieurs des deux ondes et d'une partie plane de liaison entre les pieds des deux ondes. Ainsi, les deux passages de guidage 60 desdits moyens de guidage positionnés sur les longerons intermédiaires 2 reçoivent chacun deux traverses 3 qui sont positionnées de manière à laisser un espace libre entre leur extrémité en vis-à-vis de telle sorte que lesdites extrémités des traverses débouchent à l'aplomb de la goulotte centrale 21 du longeron intermédiaire 2. Autrement dit, les traverses 3 qui relient entre elles les longerons 2, 200 à un niveau donné forment une traverse globale interrompue au niveau de la goulotte centrale 21 de chaque longeron 2, 200 pour permettre à l'eau récupérée par chaque traverse 3 d'être évacuée par un longeron 2, 200 à proximité.

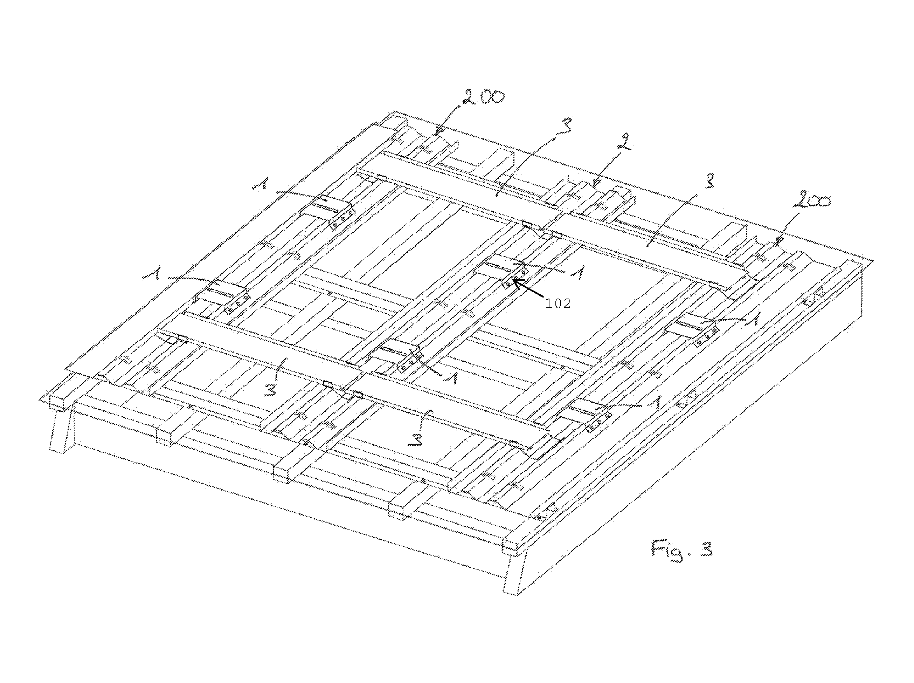

Comme illustré à la figure 3, des platines 1 de fixation sont positionnées sur chaque longeron 2, 200, à cheval sur deux ondes 22. Lesdites platines sont écartées les unes des autres le long de chaque longeron 2, 200 en fonction des dimensions des panneaux 4. Lesdites platines 4 sont réparties, de préférence par deux, entre deux traverses 3 le long d'un longeron 2, 200 pour obtenir le nombre de zones de maintien souhaité.

Comme illustré à la figure 4, les platines positionnées sur les longerons d'extrémité sont équipées des pièces de fixation 24, 24' décrites ci-dessus.

En particulier, les platines 1 positionnées sur les longerons 2 intermédiaires sont équipées de pièces 24' comprenant deux ailes en équerre s'étendant dans des directions opposées transversalement à l'axe du longeron pour venir en appui sur la face supérieure de deux panneaux juxtaposés latéralement tout en les maintenant écartés l'un de l'autre de telle sorte que les bords latéraux en vis-à-vis desdits panneaux s'étendent à l'aplomb de la goulotte centrale du longeron 2 qui les supporte.

Un tel positionnement des platines 1, et donc des pièces de fixation 24, 24' des panneaux, à écartement les unes des autres le long des longerons permet de fournir des emplacements ponctuels de maintien des panneaux 4, ce qui assure une bonne ventilation des panneaux, notamment dans l'espace entre panneaux, puisque la périphérie desdits panneaux, tenus latéralement en des zones ponctuelles par les pièces de fixation 24, 24' couplées aux platines 1, n'est pas enfermée.

Chaque platine 1 est pourvue d'au moins une fente orientée, à l'état positionné de la platine sur un longeron 2, 200, orthogonalement à l'axe longitudinal dudit longeron 2, 200 pour permettre de régler la position de la pièce de fixation 24, 24' correspondante le long de la fente en fonction de la position du bord latéral du panneau à supporter par ladite platine.

On peut prévoir qu'une partie des platines ou chaque platine 1 comprenne deux fentes. Lesdites fentes sont alors orientées parallèlement l'une à l'autre en étant écartées l'une de l'autre suivant leur direction longitudinale, et, d'autre part, écartées l'une de l'autre suivant une direction transversale à leur direction longitudinale.

La ou chaque fente emprisonne une pièce écrou à laquelle est destinée à être couplée, par l'intermédiaire d'une vis, ladite pièce de fixation 24, 24' pour panneau.

Les panneaux 4 sont positionnés, d'une part, en appui par leurs bords latéraux sur les platines 1 correspondantes, d'autre part, en appui par leurs bords d'extrémité haut et bas en appui sur les traverses. Des bavettes 35 sont alors rapportées le long des traverses 3 d'extrémité haute et basse pour assurer, d'une part, la jonction entre la traverse d'extrémité haute et les tuiles hautes et, d'autre part, la jonction entre la traverse d'extrémité basse et la gouttière basse de la toiture.

La présente invention n'est nullement limitée aux modes de réalisation décrits et représentés, mais l'homme du métier saura y apporter toute variante conforme à son esprit.

## Revendications

1. Structure-support pour panneau(x) (4), tel(s) que panneau(s) photovoltaïque(s), comprenant, pour chaque panneau (4) à supporter, un cadre formé de longerons (2, 200) et de traverses (3) réalisés chacun sous forme d'un profilé présentant au moins une partie conformée en canal de récupération d'eau, lesdits longerons (2, 200) et lesdites traverses (3) étant écartés les uns des autres de manière à délimiter entre eux un espace de ventilation sous ledit panneau (4) à supporter, et de manière à permettre audit panneau (4) à supporter, de reposer, directement ou indirectement, par ses bords sur les longerons (2, 200) et les traverses (3) dudit cadre, à l'aplomb des parties des longerons (2, 200) et traverses (3) qui forment canaux de récupération d'eau afin de récupérer l'eau qui s'écoule des bords du ou de chaque panneau à l'aide desdits longerons (2, 200) et traverses (3) de la structure-support,
chaque longeron (2, 200) étant formé par une plaque profilée présentant au moins deux ondes longitudinales, l'espace délimité entre les deux ondes formant un canal de récupération d'eau dit central,
**caractérisée en ce que** la structure-support comprend, pour chaque longeron, au moins deux platines de fixation (1) écartées l'une de l'autre le long dudit longeron (2, 200) et positionnées chacune à cheval sur lesdites au moins deux ondes en étant fixées sur les deux flancs extérieurs de l'ensemble d'ondes du longeron chevauché par lesdites platines de fixation (1).

2. Structure-support selon la revendication 1, **caractérisée en ce que** chaque platine de fixation (1 ) comprend deux parties d'extrémité (102) qui forment entre elles un V tronqué renversé à l'état fixé de la platine de fixation (1) sur le longeron correspondant, lesdites parties d'extrémité (102) étant fixées sur lesdits flancs extérieurs de l'ensemble d'ondes chevauché par ladite platine.

3. Structure-support selon la revendication 2, **caractérisée en ce qu'**au moins un, de préférence chacun, des bords longitudinaux libres de chaque longeron (2, 200) présente un retour côté support du panneau de manière à former un canal (20) de récupération d'eau dit latéral.

4. Structure-support selon l'une des revendications précédentes, **caractérisée en ce que** les traverses (3) reposent, directement ou indirectement, sur les longerons (2, 200) en s'étendant orthogonalement auxdits longerons (2, 200) avec interruption des traverses au niveau d'une partie dudit longeron (2, 200) formant canal de récupération d'eau (21) de telle sorte que l'eau récupérée par chaque traverse (3) tombe dans ledit canal de récupération d'eau (21) du longeron (2, 200).

5. Structure-support selon l'une des revendications précédentes, **caractérisée en ce que** chaque longeron (2, 200) est équipé de moyens de maintien et de guidage (6, 600) de traverse, chaque moyen de maintien et de guidage (6, 600) comprenant au moins un passage de guidage (60) à l'intérieur duquel chaque traverse (3) est apte à être introduite et maintenue par clipsage.

6. Structure-support selon l'une des revendications précédentes, **caractérisée en ce qu'**au moins un longeron (2, 200) et/ou une traverse (3) formant un bord latéral ou un bord d'extrémité haut ou bas de la structure-support, de préférence chacun des longerons (2, 200) et traverses (3) formant lesdits bords de la structure-support, comprend une bavette (25, 35) qui prolonge ladite traverse (3) ou ledit longeron (2, 200) suivant une direction transversale respectivement audit longeron (2, 200) ou à ladite traverse (3).

7. Structure-support selon l'une des revendications précédentes, **caractérisée en ce que** les platines (1) de fixation, disposées à cheval sur au moins deux ondes du longeron (2, 200), sont équipées de pièces de fixation (24, 24') permettant de maintenir le panneau (4) correspondant sur la structure-support tout en laissant un espace de ventilation autour de la périphérie dudit panneau (4).

8. Installation de panneau(x) (4), de préférence de panneaux photovoltaïques, comprenant, d'une part, au moins un panneau (4), de préférence plusieurs panneaux (4) juxtaposés à écartement de manière à laisser un espace libre entre les panneaux (4), et, d'autre part, une structure-support,
**caractérisée en ce que** ladite structure-support comprend un cadre par panneau formé de longerons (2, 200) et de traverses (3) réalisés chacun sous forme d'un profilé présentant au moins une partie conformée en canal de récupération d'eau, lesdits longerons (2, 200) et lesdites traverses (3) étant écartés les uns des autres, en fonction des dimensions du panneau (4) correspondant à supporter, de manière à délimiter entre eux un espace de ventilation sous ledit panneau (4) et de telle sorte que ledit panneau (4) associé audit cadre repose, directement ou indirectement, par ses bords sur lesdits longerons (2, 200) et lesdites traverses (3) à l'aplomb des parties des longerons (2, 200) et traverses (3) qui forment des canaux de récupération d'eau de manière à récupérer l'eau qui s'écoule des bords de chaque panneau à l'aide desdits longerons (2, 200) et traverses (3) de la structure-support, chaque longeron (2, 200) étant formé par une plaque profilée présentant au moins deux ondes longitudinales, l'espace délimité entre les deux ondes formant un canal de récupération d'eau dit central,
**caractérisée en ce que** la structure-support comprend, pour chaque longeron (2, 200), au moins deux platines de fixation (1) écartées l'une de l'autre le long dudit longeron (2, 200) et positionnées chacune à cheval sur lesdites au moins deux ondes en étant fixées sur les deux flancs extérieurs de l'ensemble d'ondes du longeron (2, 200) chevauché par lesdites platines de fixation (1).

9. Installation de panneaux (4) selon la revendication 8, du type comprenant au moins deux panneaux (4) et du type pour laquelle la structure-support comprend au moins trois longerons (2, 200) parallèles et écartés les uns des autres en fonction des dimensions des panneaux (4) de telle sorte que le ou chaque longeron (2), dit intermédiaire, situé entre deux autres longerons (200) porte, directement ou indirectement, deux panneaux (4) par leurs bords en vis-à-vis qui sont positionnés à l'aplomb d'une partie (21) dudit longeron formant canal de récupération d'eau.

10. Installation de panneaux (4) selon l'une des revendications 8 et 9, **caractérisée en ce que** lesdites platines de fixation (1) sont équipées de pièces de fixation (24, 24') qui maintiennent chaque panneau (4) par deux de ses bords opposés au niveau de zones ponctuelles desdits bords du panneau (4) en laissant un espace libre de ventilation autour de la périphérie du panneau (4).

11. Installation de panneaux (4) selon l'une des revendications 8 à 10, du type pour laquelle le ou chaque panneau (4) est un panneau photovoltaïque formé d'une plaque, de préférence en verre, munie d'une matrice de cellules photovoltaïques et entourée d'un cadre, un joint d'étanchéité étant ménagé entre le bord extérieur de la plaque de cellules et le bord intérieur du cadre du panneau,
**caractérisée en ce que** les longerons (2, 200) de la structure-support sont dimensionnés et positionnés en fonction des dimensions du ou des panneaux (4), de telle sorte que chaque bord latéral intérieur du cadre d'un panneau (4) porté par un longeron (2, 200), est situé à l'aplomb d'une partie (20) du longeron (2, 200) formant canal de récupération d'eau.
